Europäisches Patentamt

European Patent Office

Office européen des brevets

(19)

(11) Veröffentlichungsnummer: **0 268 900**
**B1**

(12) **EUROPÄISCHE PATENTSCHRIFT**

(45) Veröffentlichungstag der Patentschrift: 06.02.91

(21) Anmeldenummer: 87116355.6

(22) Anmeldetag: 06.11.87

(51) Int. Cl.⁵: **H 02 K 7/116, H 02 K 1/18, H 02 K 5/15, H 02 K 5/16**

(54) Antriebsbaugruppe.

(30) Priorität: 25.11.86 DE 3640273

(43) Veröffentlichungstag der Anmeldung:
01.06.88 Patentblatt 88/22

(45) Bekanntmachung des Hinweises auf die Patenterteilung:
06.02.91 Patentblatt 91/06

(84) Benannte Vertragsstaaten:
DE FR GB IT

(56) Entgegenhaltungen:
CH-A- 391 862
FR-A-2 445 053
FR-A-2 505 572
GB-A-1 580 289
GB-A-2 074 391
US-A-4 352 036

(73) Patentinhaber: Mannesmann Kienzle GmbH
Heinrich-Hertz-Strasse
D-7730 Villingen-Schwenningen (DE)

(72) Erfinder: Helmschrott, Norbert
Wasenstrasse 94
D-7730 Villingen-Schwenningen (DE)

**Beschreibung**

Die Erfindung betrifft eine Antriebsbaugruppe mit einem Elektromotor und einem Getriebe, welche einer Montageplatte eines Registriergerätes zugeordnet ist, deren Montagefläche wesentlich größer ist als die von der Antriebsbaugruppe beanspruchte Montagefläche und an welcher Mittel zur Befestigung von Bauteilen und Baugruppen in Outsert-Technik angeformt sind.

Bekanntlich werden bei registrierenden Meßgeräten derartige Antriebsbaugruppen für die verschiedensten Funktionen benötigt, beispielsweise für den Antrieb des Aufzeichnungsträgers, für die Betätigung von Registrierorganen und Anzeigemitteln sowie für das Handhaben von Aufzeichnungsträgern, d.h. Einführen, Ausrichten und Ausgeben bei solchen Registriergeräten, bei denen scheiben- oder blattförmige Aufzeichnungsträger lediglich durch einen Schlitz zugeführt werden. Derartige Registriergeräte sind im allgemeinen als Einbaugeräte oder als fremdgesteuerte Registriermodule konzipiert und müssen, wenn ihre Anwendbarkeit breit gestreut sein soll, bei einem möglichst geringen Raumbedarf eine hohe Funktionssicherheit und Wartungsfreiheit aufweisen. Außerdem muß das konstruktive Konzept dieser Geräte den Anforderungen der Großserienfertigung gerecht werden, d.h. die angestrebte Funktionssicherheit muß ohne Justieraufwand reproduzierbar sein und die Bauteile auch von größeren Einheiten sollten, um auch maschinell montierbar zu sein, lediglich durch Zusammenfügen in Funktionslage gebracht werden können.

Diese Anforderungen bezüglich Funktionssicherheit, wirtschaftlicher Fertigung und Raumbedarf lassen sich bekanntlich mit der Outsert-Spritzgußtechnik als Konstruktionsbasis zufriedenstellend realisieren. Voraussetzung ist jedoch, daß dieses Fertigungsprinzip, das die spezifischen Eigenschaften des Metall-Kunststoff-Materialverbundes bietet, konsequent genutzt wird. Die Outsert-Spritzgußtechnik, bei der eine metallische Platte verschiedenen Funktionselementen aus Kunststoff als Träger mit hoher Maßhaltigkeit dient, ist insbesondere dort vorteilhaft anwendbar, wo die betreffenden Geräte weiten Temperaturgängen ausgesetzt sind und Vollkunststoffausführungen nicht ausreichend maßhaltig und formstabil sein würden. Dies gilt beispielsweise für die Kraftfahrzeuginstrumentierung, die für Temperaturen zwischen 40° und +80°C konzipiert sein muß.

Bei derartigen Meß- und Registriergeräten war es bisher üblich, den Elektromotor der betreffenden Antriebsbaugruppe mittels eines an diesem ausgebildeten Flansches oder eines geeigneten zusätzlichen Halters an der jeweiligen Montageplatte durch Schrauben zu befestigen, wobei in der Regel der Zahnradeingriff zwischen dem auf der Motorwelle befestigten Ritzel und dem nächstfolgenden Zahnrad des Getriebes während der Montage justiert werden mußte.

Ferner ist es, wie beispielseise die US-A 4 352 036 zeigt, bekannt, eine derartige Antriebsbauruppe aus Gründen einer vielseitigen, d.h. nicht gerätespezifischen Verwendbarkeit und Austauschfähigkeit als autonome Baueinheit auszubilden und beispielsweise einen Schrittmotor oder einen Gleichstrom-Stellmotor, ein Getriebe und einen Stellungsgeber als Nachlaufaggregat für Kompensationsmeßgeräte baulich zusammenzufassen. Zwar stellt eine derartige autonome Antriebsbaugruppe ein vielseitig verwendbares und unabhängig von einem bestimmten Meß- bzw. Registriergerät handhabbares Aggregat dar, sie setzt jedoch sowohl bei einem gegebenen Gerätekonzept als auch bei einer Neuentwicklung eines Registriergerätes einer weiteren Aufwandminimierung und einer konsequenten Optimierung bezüglich Funktion und Raumgestaltung, insbesondere Bauraumverdichtung, Grenzen und erfordert den Aufwand eines selbsttragenden, wenigstens staubdicht schließenden Gehäuses sowie besondere Befestigungsvorkehrungen.

Verständlicherweise begrenzen derartige Montagekonzepte die Eignung eines Gerätes für die Großserienfertigung.

Aufgabe der vorliegenden Erfindung war es daher, die Montierbarkeit einer Antriebsbaugruppe eines registrierenden Meßgerätes im Hinblick auf eine Großserienfertigung des Gerätes zu verbessern, insbesondere die Outsert-Spritzgutechnik konsequent zu nutzen.

Die Lösung dieser Aufgabe sieht vor, daß an der Montageplatte ein Lagerschild des Elektromotors angeformt ist, daß an dem an der Montageplatte ausgebildeten Lagerschild wenigstens eine der Aufnahme eines Statorelementes des Elektromotors dienende Fassung und wenigstens ein Sitz für ein Lager der Motorwelle ausgebildet sind, daß Achsen- und Wellenlagersitze des Getriebes der Antriebsbaugruppe sowie ein das Getriebe umfassender Rahmen unmittelbar an der Montageplatte spritzgußtechnisch ausgebildet sind und daß die Passungen der Fassung sowie der Achsen- und Wellenlagersitze in bezug auf die aufzunehmenden Bauteile derart ausgeführt sind, daß die Bauteile durch Einpressen befestigbar sind.

Ein bevorzugtes Ausführungsbeispiel ist dadurch gekennzeichnet, daß bei Verwendung eines Elektromotors mit eisenlosem, glockenförmigem Rotor beide Sitze für die Lager der den Rotor tragenden Motorwelle und eine Fassung für den Rückschlußring des Elektromotors in dem an der Montageplatte ausgebildeten Lagerschild angeformt sind, daß der ringförmige Permanentmagnet des Elektromotors spritzugußtechnisch mit dem Lagerschild verbunden ist und daß an der Innenseite eines dem Rahmen zugeordneten Deckels die Widerstandsbahn und die Kollektorbahn eines Stellungsgebers der Antriebsbaugruppe aufgebracht sind.

Die Erfindung bietet, bezogen auf ein bestimmtes Registriergerät, den Vorteil eines größeren konstruktiven Freiraums für die Anordnung einer Antriebsbaugruppe, wobei unterschiedliche Motortypen Anwendung finden können. Sie eignet sich für die maschinelle, also eine relativ einfache Montage, sie erfordert weniger Einzelteile und bewirkt, da weder Verschraubungen, noch Justierarbeit erforderlich sind, daß das betreffende Registriergerät wesentlich produktiver und mit einer relativ hohen und gut reproduzierbaren Qualität herstellbar ist. Entscheidend ist ferner der Gedanke der Integration eines Elektromotors einer beliebigen Antriebsbaugruppe in den Herstellungsprozeß einer in Outsert-Technik zu bearbeitenden Montageplatte, insbesondere jedoch die Integration eines kompletten Nachlaufaggregats mit einer weitestgehenden Minimierung des Bauteileaufwandes und der Bauhöhe.

Im folgenden sei ein Ausführungsbeispiel einer erfindungsgemäß ausgebildeten Antriebsbaugruppe anhand der beigefügten Zeichnungen näher erläutert. Es zeigen

FIGUR 1 eine Gesamtansicht der Antriebsbaugruppe und einer mit dieser in getrieblicher Verbindung stehenden Registrieranordnung,

FIGUR 2 eine Schnittdarstellung der in Outsert-Technik an einer Montageplatte angeformten Elemente der Antriebsbaugruppe,

FIGUR 3 eine Draufsicht der Montageplatte mit den gemäß FIGUR 2 angeformten Elementen der Antriebsbaugruppe,

FIGUR 4 eine Explosionsdarstellung der Antriebsbaugruppe in einem bestimmten Montagezustand.

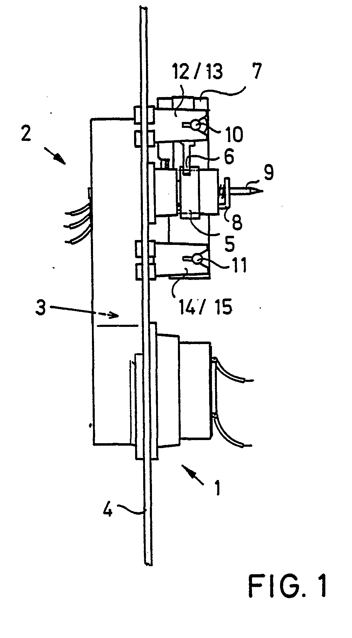

Die Gesamtansicht FIGUR 1 zeigt als Antriebsbaugruppe ein Nachlaufaggregat eines registrierenden Kompensationsmeßgerätes, dessen Stellmotor ein üblicherweise gleichstromgespeister Elektromotor 1 und dessen Stellungsgeber 2 ein vorzugsweise konzentrisch zur Stellwelle des Nachlaufaggregates angeordnetes Potentiometer zusammen mit einem beide Funktionseinheiten verbindenden, die Motordrehzahlen untersetzenden Getriebe 3 einer Montageplatte 4 zugeordnet sind. Dabei steht das in Richtung des Kraftflusses letzte Zahnrad 5 des vorzugsweise gekapselten Getriebes 3 in Eingriff mit einer Verzahnung 6, welche an einem Registrierschlitten 7 ausgebildet ist, der ein in einer in geeigneter Weise ausgebildeten Lagerbrücke 8 gefedert gelagertes Registrierorgan 9 trägt. Falls das betreffende Gerät auch als Anzeigegerät ausgebildet ist, können an dem Zahnrad 5, was nicht näher bezeichnet ist, stirnseitig eine Zentriersenkung und ein Mitnahmeschlitz als Kupplungsmittel für eine Zeigerwelle ausgebildet sein. Der Registrierschlitten 7 seinerseits ist auf Führungsstangen 10 und 11, die in an der Montageplatte 4 angeformten Stützen 12/13 und 14/15 gehalten sind, verschiebbar gelagert.

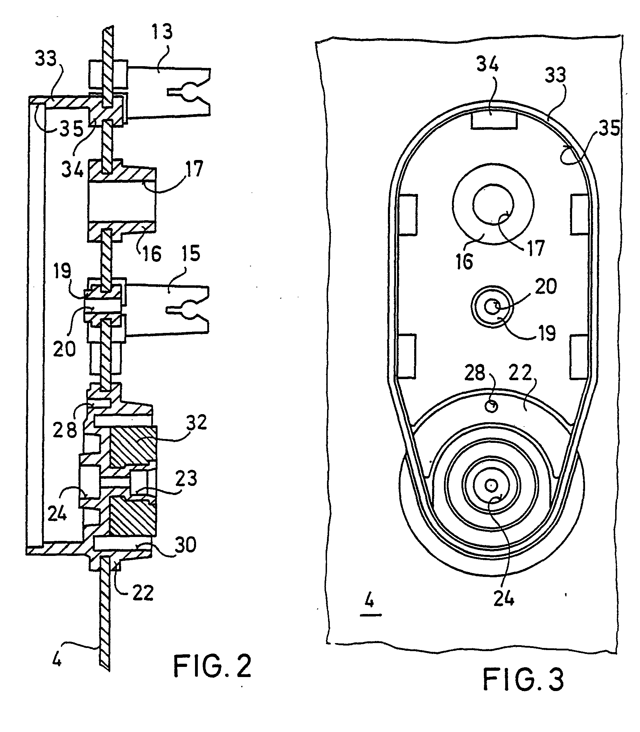

Gemäß den FIGUREN 2 und 3 ist an der Montageplatte 4 eine erste Fassung 16 mit einer Öffnung 17 für die Aufnahme einer Lagerbuchse 18 und eine zweite Fassung 19 mit einer Öffnung 20 für die Aufnahme einer Achse 21 des Getriebes 3 angeformt. Mit 22 ist ein Lagerschild des Stellmotors 1 bezeichnet, welcher erfindungsgemäß in der Montageplatte 4 spritzgußtechnisch integriert ist. Gleichzeitig mit dem Spritzvorgang der an der Montageplatte 4 anzuformenden Elemente werden an dem Lagerschild 22 Sitze 23 und 24 für die Lager 25 und 26 der Motorwelle 27, eine Öffnung 28 für eine weitere Achse 29 des Getriebes 3 und eine Fassung 30 für den Rückschlußring 31 ausgebildet und ein ringförmiger Permanentmagnet 32 des Stellmotors 1, in diesem Falle eines Motors mit einem eisenlosen, glockenförmigen Rotor, befestigt. Mit demselben Spritzarbeitsgang wird außerdem ein dem Getriebe 3 zugeordneter Rahmen 33, der einerseits mit dem Lagerschild 22 verbunden ist, andererseits an mehreren Stellen, von denen eine mit 34 bezeichnet ist, die Montageplatte 4 umgreift, angeformt. Eine an dem Rahmen 33 ausgebildete Schulter 35 dient dem Einsetzen eines Deckels 36, welcher, was bei der Ausbildung der Antriebsbaugruppe als Nachlaufaggregat, insbesondere der Potentiometerfunktion wegen, zwingend erforderlich ist, das Getriebe weitgehend staub- und eingriffssicher abdeckt.

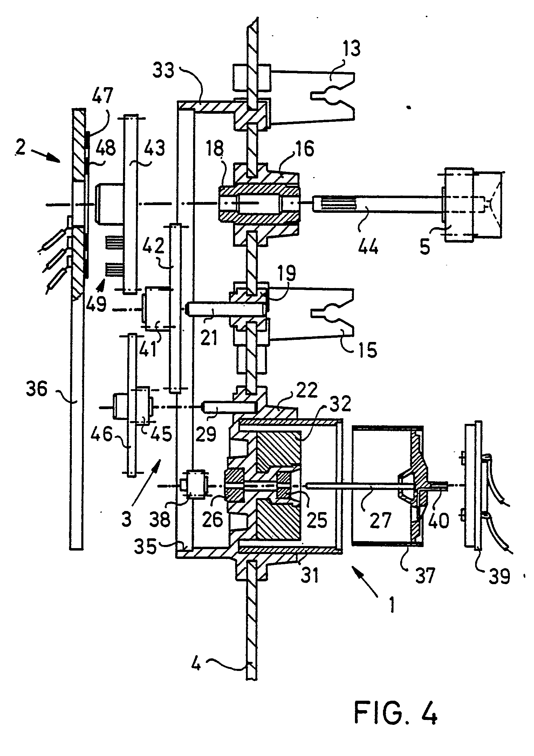

Die FIGUR 4 zeigt einen Montagezutand der Antriebsbaugruppe, in welchem die Achsen 21 und 29 sowie die Lagerbuchsen 18, 25 und 26 in die betreffenden Fassungen und Sitze der Montageplatte 4 eingepreßt sind und der Rückschlußring 31, der mit entsprechendem Werkzeugaufwand auch einspritzbar wäre, in die vorgesehene Fassung 30 eingesetzt ist. Die weiteren Montagearbeitsgänge sind:

Einsetzen eines Rotors 37 und Aufpressen des Motorritzels 38, sowie Einsetzen eines Deckels 39, innerhalb dessen mit dem rotorseitigen Kommutator 40 zusammenwirkende Bürsten angeordnet sind, in den Rückschlußring 31, Aufstecken eines Zahnradpaares 41/42 auf die Achse 21, Aufpressen eines Zahnrades 43 auf eine in die Lagerbuchse 18 eingeführte, das Zahnrad 5 tragende Welle 44, Aufstecken eines Zahnradpaares 45/46 auf die Achse 29 und Einsetzen des Deckels 36 in den Rahmen 33, wobei die Kontaktbahnen, d.h. die Widerstandsbahn 47 und die Kollektorbahn 48 des Stellungsgebers 2, mit einer an dem Zahnrad 43 befestigten Schleiffeder-Kontaktbrücke 49 in Wirkverbindung treten.

In den Fällen, die einen bestmöglichen Staubschutz erfordern, ist es denkbar, den Rand des Rahmens 33 mit dem Deckel 36 zu verbördeln oder zu verschweißen.

Der Vollständigkeit halber sei noch erwähnt, daß die Kontaktbahnen in Form von Folienmaterial oder im Siebdruckerfahren an der Innenseite des Deckels 36 aufgebracht sein können. Außerdem ist es denkbar, den Deckel 36 als Leiterplatte auszubilden, die sowohl die Kontaktbahnen des Stellungsgebers 2 als auch Leiterbahnen und elektrische Bauelemente, wenigstens diejenigen, die der Steuerung des Nachlaufaggregates dienen, trägt.

Die Erfindung läßt sich selbstverständlich nicht nur bei Gleichstrom-Kleinmotoren mit eisenlosen Rotoren realisieren. In gleicher Weise ist auch der Lagerschild eines Eisenläufer-Gleichstrommotors oder eines Schrittmotors mit einer Montageplatte verbindbar und geeignete Fassungen für deren Statore spritzgußtechnisch ausbildbar.

**Patentansprüche**

1. Antriebsbaugruppe mit einem Elektromotor (1) und einem Getriebe (3), welche einer Montageplatte (4) eines Registriergerätes zugeordnet ist, deren Montagefläche wesentlich größer ist als die von der Antriebsbaugruppe beanspruchte Montagefläche und an welcher Mittel zur Befestigung von Bauteilen und Baugruppen in Outsert-Technik angeformt sind, dadurch gekennzeichnet,

daß an der Montageplatte (4) ein Lagerschild (22) des Elektromotors (1) angeformt ist,

daß an dem an der Montageplatte (4) ausgebildeten Lagerschild (22) wenigstens eine der Aufnahme eines Statorelementes des Elektromotors (1) dienende Fassung (30) und wenigstens ein Sitz (24) für ein rager (26) der Motorwelle (27) ausgebildet sind,

daß Achsen- und Wellenlagersitze (17, 20, 28) des Getriebes (3) der Antriebsbaugruppe sowie ein das Getriebe (3) umfassender Rahmen (33) unmittelbar an der Montageplatte (4) spritzgußtechnisch ausgebildet sind und

daß die Passungen der Fassung (30) sowie der Achsen- und Wellenlagersitze (17, 20, 23, 24, 28) in bezug auf die aufzunehmenden Bauteile derart ausgeführt sind, daß die Bauteile durch Einpressen befestigbar sind.

2. Antriebsbaugruppe nach Anspruch 1, dadurch gekennzeichnet, daß an der Innenseite eines dem Rahmen (33) zugeordneten Deckels (36) die Widerstandsbahn (47) und die Kollektorbahn (48) eines Stellungsgebers (2) der Antriebsbaugruppe aufgebracht sind.

3. Antriebsbaugruppe nach Anspruch 1, dadurch gekennzeichnet, daß bei Verwendung eines Elektromotors (1) mit eisenlosem, glockenförmigem Rotor (37) beide Sitze (23, 24) für die Lager (25, 26) der den Rotor tragenden Motorwelle (27) und eine Fassung (30) für den Rükschlußring (31) des Elektromotors (1) in dem an der Montageplatte (4) ausgebildeten Lagerschild (22) angeformt sind und daß der ringförmige Permanentmagnet (32) des Elektromotors (1) spritzgußtechnisch mit dem Lagerschild (22) verbunden ist.

**Revendications**

1. Sous-ensemble d'entraînement avec un moteur électrique (1) et un engrenage (3) qui est assoicé à une plaque de montage (4) d'un appareil enregistreur dont la surface de montage est essentiellement plus grande que la surface de montage exigée par le sous-ensemble d'entraînement et sur laquelle sont formés des moyens pour la fixation de composants et de sous-ensembles en technique outsert, caractérisé par le fait

que sur la plaque de montage (4) soit formé un flasque (22) du moteur électrique (1), que sur le flasque (22) formé sur la plaque de montage (4) est formée au moins une monture (30) servant à loger un élément statorique du moteur électrique (1) et au moins un siège (24) pour un palier (26) de l'arbre de moteur (27),

que les sièges de paliers d'axe et d'arbre (17, 20, 28) de l'engrenage (3) du sous-ensemble d'entraînement ainsi qu'un cadre (33) entourant l'engrenage (3) sont directement formés par la technique de moulage par injection sur la plaque de montage (4) et

que les ajustements de la monture (30) ainsi que les sièges de paliers d'axe et d'arbre (17, 20, 23, 24, 28) sont réalisés, par rapport aux composants à loger, de telle sorte que ces composants peuvent être fixés par enfoncement.

2. Sous-ensemble d'entraînement selon la revendication 1, caractérisé par le fait

que sur la face intérieure d'un couvercle (36) associé au cadre (33) sont disposées la piste résistante (47) et la piste de collecteur (48) d'un capteur de position (2) du sous-ensemble d'entraînement.

3. Sous-ensemble d'entraînement selon la revendication 1, caractérisé par le fait

que, en cas d'utilisation d'un moteur électrique (1) avec un rotor (37) sans fer, en forme de cloche, les deux sièges (23, 24) pour les paliers (25, 26) de l'arbre de moteur (27) portant le rotor et une monture (30) pour l'anneau de retour magnétique (31) du moteur électrique (1) sont formés dans le flasque (22) réalisé sur la plaque de montage (4) et que l'aimant permanent annulaire (32) du moteur électrique (1) est relié, par la technique de moulage par injection, au flasque (22).

**Claims**

1. Drive assembly having an electric motor (1) and a gear (3) which is associated with a mounting plate (4) of a recording device, whereof the mounting surface is substantially larger than the mounting surface required by the drive assembly, and on which there are formed means for securing components and assemblies by the outsert technique, characterized in that there is formed on the mounting plate (4) an end plate (22) of the electric motor (1), in that at least one socket mounting (30) serving to receive a stator element of the electric motor (1) and at least one seating (24) for a bearing (26) of the motor shaft (27) are constructed on the end plate (22) constructed on the mounting plate (4), in that spindle and shaft bearing seatings (17, 20, 28) of the gear (3) of the drive assembly and a frame (33) surrounding the gear (3) are constructed by the technique of injection moulding directly on the mounting plate (4), and in that the fittings of the socket mounting (30) and of the spindle and shaft bearing seatings (17, 20, 23, 24, 28) are constructed in respect of the components to be received such that the components may be secured by being pressed in.

2. Drive assembly according to Claim 1, characterized in that the resistor track (47) and the collector track (48) of a position encoder (2) of the drive assembly are mounted on the inside of a cover (36) associated with the frame (33).

3. Drive assembly according to Claim 1, characterized in that, when using an electric motor (1) having an ironless bell-shaped rotor (37), both seatings (23, 24) for the bearings (25, 26) of the motor shaft (27) carrying the rotor and a socket mounting (30) for the return ring (31) of the electric motor (1) are formed in the end plate (22) constructed on the mounting plate (4), and in that the annular permanent magnet (32) of the electric motor (1) is connected to the end plate (22) by the technique of injection moulding.

12 / 13   7

2

10

6

9

8

3

5

11

14 / 15

1

4

FIG. 1

FIG.2

FIG.3

FIG. 4